# EUROPEAN PATENT APPLICATION

(11) **EP 4 684 647 A1**
(43) Date of publication of application: **28.01.2026**
(21) Application number: 25191067.5
(22) Date of filing: 22.07.2025
(51) Int. Cl.: A23D 9/007, A23L 33/105, A23L 33/115, A23D 9/04, C11B 5/00

(54) **METHOD FOR PREPARING OILY AND/OR LIPID MATRICES ENRICHED IN POLYPHENOLS**

(30) Priority: 23.07.2024 IT 202400017041
(71) Applicant: Active-Italia S.r.l., 00153 Rome (IT)
(72) Inventor: Federico, Rodolfo, 00156 Rome (IT); Berti, Umberto, 00128 Rome (IT); Mosca, Luciana, 00178 Rome (IT); Mattioli, Roberto, 00166 Rome (IT); Miceli, Eleonora, 00046 Rome (IT); Cristello, Luana, 00153 Rome (IT)
(74) Representative: Di Giovine, Paolo

(57) **Abstract**

The present invention describes a method for enriching any oil and/or lipid matrix in polyphenols, from vegetation waters produced during the treatment of olives for the production of extra virgin olive oil, as well as an oil and/or lipid matrix enriched in polyphenols obtainable by the method, and a nutraceutical product, food supplement or functional food comprising an oil and/or lipid matrix enriched in polyphenols. The present invention further describes a method for producing a polyphenol extract using an oil and/or lipid matrix enriched in polyphenols obtainable by the enrichment method of the present invention.

## Description

The present invention describes a method for enriching any oil and/or lipid matrix in polyphenols, from vegetation waters produced during the treatment of olives for the production of extra-virgin olive oil, as well as an oil and/or lipid matrix enriched in polyphenols obtainable by the method, and a nutraceutical product, food supplement or functional food comprising an oil and/or lipid matrix enriched in polyphenols. The present invention further describes a method for producing a polyphenol extract using an oil and/or lipid matrix enriched in polyphenols obtainable by the enrichment method of the present invention.

### STATE OF THE ART

During the industrial procedure for processing olive drupes and obtaining extra virgin olive oil, vegetation waters are generated as waste products. These vegetation waters, also known as washing water, are composed of water, solid olive residues and a number of organic and inorganic compounds. This by-product is considered a pollutant for several reasons. Vegetation waters contain a large amount of organic matter, such as sugars, polyphenols, lipids and proteins. This organic matter can cause an increase in the biochemical oxygen demand in the water bodies into which it is eventually discharged, reducing the dissolved oxygen content in the water and harming aquatic life. In addition, polyphenols found in vegetation waters are phenolic compounds that can have toxic effects on aquatic organisms and soil if their amounts exceed certain threshold levels. These compounds may also be difficult to degrade biologically, thus increasing the risk of long-term contamination. If not properly treated, vegetation waters can also alter the quality of soil, surface water and groundwater due to high acidity and, if used directly as a fertiliser, without proper treatment, vegetation waters can damage crops due to their content in general and the high concentration of polyphenols in particular.

In order to sustainably manage vegetation waters, several strategies and technologies have been developed over time, which can be summarised as follows:
- **Biological treatment**: Use of aerobic and anaerobic processes for the degradation of organic matter and polyphenols.
- **Natural or forced evaporation**: Reduction of the volume of vegetation waters by evaporation, thus concentrating the residues to be managed in a more controlled manner.
- **Composting**: Mixing of vegetation waters with other organic residues to produce compost, which can be used as a soil conditioner.
- **Filtration and chemical treatment**: Use of filters and chemical agents to remove contaminants from vegetation waters.

In summary, since vegetation water is a waste product in its own right and since its management and disposal can be a problem, several strategies and solutions have been developed to treat it and reduce its environmental impact. All of the listed processes, however, are laborious and economically expensive.

### SUMMARY OF THE INVENTION

The present invention relates to a method for enriching any oil matrix in polyphenols, from vegetation waters produced during the treatment of olives for the production of extra virgin olive oil. During the process of obtaining extra virgin olive oil, a highly polluting waste product is the vegetation waters, which are particularly rich in polyphenols.

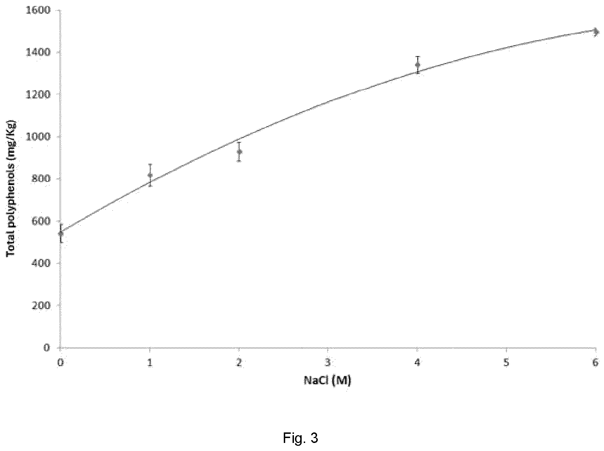

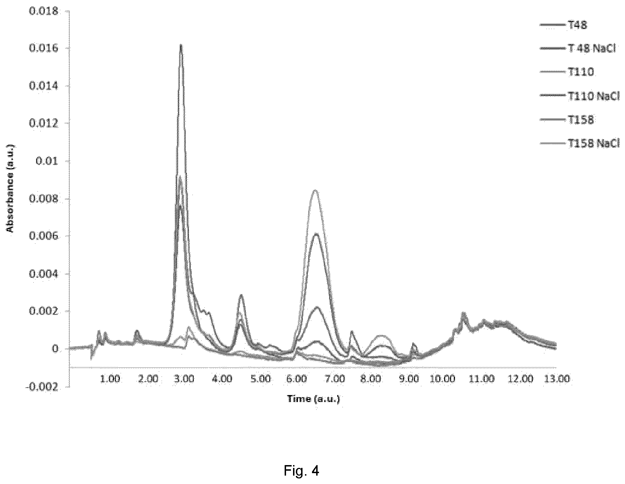

The addition of a salt to the vegetation water, produced during the process of washing, milling/crushing, crushing of the olives and production of the oil, yields another surprising and unexpected result. The vegetation water obtained from the oil production process tends to ferment and degrade its contents very rapidly within a few hours. As can be seen from Figure 4, the analysis carried out by high-performance chromatography coupled with spectrophotometric and mass analysis (UPLC-DAD-MS) shows that the polyphenols contained in the vegetation waters and transferred to the oil matrix tend to decrease as early as 48 hours and disappear completely at 110 and 158 hours. The addition of salt to the vegetation waters immediately after their production keeps the amount of polyphenols surprisingly stable over time. The amount of total polyphenols, transferred from the vegetation waters to the oil and/or lipid matrix, increases as the concentration of salt used increases, approaching the saturation point (Figure 3).

Therefore, the present invention, by means of an economical and environmentally friendly procedure, is able to reduce the content of polyphenols in vegetation waters. At the same time, the present invention makes it possible to obtain from any oily and/or lipidic matrix, such as seed oils, nutraceutical products rich in polyphenols with high added value. The present invention allows, economically and with low environmental impact, the transfer of polyphenols into any oily and/or lipidic matrix, guaranteeing a final product characterised by nutraceutical properties.

In fact, it is well known that many oil matrices such as seed oil, although characterised by good lipid profiles containing high levels of mono- and polyunsaturated fatty acids, are completely devoid of bioactive molecules such as polyphenols, which we find instead in abundance in extra virgin olive oils. Supplementing seed oils or any other oil and/or lipid matrix with polyphenols can be very useful for several reasons related to health and product stability. Polyphenols, in fact, are known for their antioxidant properties. They can help fight oxidative stress and reduce the risk of chronic diseases such as cardiovascular diseases, diabetes and some types of cancer. In addition, many polyphenols have anti-inflammatory effects, which can help reduce chronic inflammation, a key factor in the development of many chronic diseases. In addition to direct health benefits, polyphenol supplementation can generally improve the nutritional profile of seed oils or other oil and/or fat matrices, making them more attractive to health-conscious consumers. On the other hand, with regard to product protection, the addition of polyphenols may increase the oxidation resistance of seed oils, prolonging their shelf life and improving product stability.

Finally, the present invention makes it possible to obtain extracts in natural deep eutectic solvents (NaDES) enriched in polyphenols in an even more economical manner than current technology makes possible, no longer starting from extra-virgin olive oil but from one of its waste products and always using the same oily and/or lipidic matrix, loading/unloading it in a cyclic manner.

An object of the present invention is:
a method for preparing an oil and/or lipid matrix enriched in polyphenols, comprising the steps of:
   (a) providing vegetation water,
   (b) adding a salt to said vegetation water,
   (c) mixing said vegetation water in step (b) with an oily and/or lipidic matrix, to obtain an oily and/or lipidic matrix enriched in polyphenols
   (d) separating said oily and/or lipidic matrix enriched with said vegetation water;
an oil and/or lipid matrix enriched in polyphenols obtainable by the method according to the present invention;
a nutraceutical, food supplement or functional food comprising an oil and/or lipid matrix enriched in polyphenols according to the present invention;
a method for producing a polyphenol extract comprising the following steps:
   (i) providing an oily and/or lipid matrix comprising said polyphenols obtained by the method according to the present invention;
   (ii) bringing said oily and/or lipid matrix into contact with said at least one eutectic solvent for a sufficient time to permit extraction of said polyphenols in said at least one eutectic solvent, preferably wherein said eutectic solvent is a NaDES comprising or consisting of propylene glycol and betaine, propylene glycol and choline, propylene glycol and proline, glycerol and betaine, glycerol and choline or glycerol and proline;
   (iii) separating the polyphenol extract in eutectic solvent obtained in step (ii) from the oily and/or lipid matrix.

### DETAILED DESCRIPTION OF THE FIGURES

Fig. 1. Total content of polyphenols transferred from vegetation water to seed oil as a function of use ratio (1:10, 2:10, 4:10, 8:10 and 1.5:1 vegetation water: seed oil). Results represented as mean ± standard deviations.
Fig. 2. Content of individual polyphenols (hydroxytyrosol (A), tyrosol (B), oleacein (C), oleocanthal (D)) transferred from the vegetation water to the seed oil, as a function of the use ratio (1:10, 2:10, 4:10, 8:10 and 1.5:1 vegetation water: seed oil).
Fig. 3. Total polyphenol content transferred from vegetation water to seed oil, as a function of the NaCl concentration used. Results represented as mean ± standard deviations (R²: 0.99).
Fig. 4. Chromatograms describing the stability of polyphenols in the vegetation water as a function of time and the presence of NaCl (T48, T110, T158: polyphenols transferred to the seed oil from vegetation water left at room temperature for 48, 110 and 158 h after its production; T48 NaCl, T110 NaCl, T158 NaCl: polyphenols transferred to the seed oil from vegetation water treated with NaCl at the time of its preparation and left at room temperature for 48, 110 and 158).

### GLOSSARY

The terms used in this description are as generally understood by the person skilled in the art, except where otherwise indicated.

The term "vegetation water" refers to the wastewater resulting from the processing of olive oil. It is made up of the water contained in the drupe, washing water and process water (which in traditional plants can be quantified at between 40 and 120 litres per quintal of olives processed). These waters have a high concentration of organic substances such as sugars, pectins, fats, nitrogenous substances, polyols, polyacids, polyphenols and mineral elements such as phosphorus, potassium, magnesium and calcium. Vegetable waters have a dark colour, which may be black, a typical very intense odour, they have a slightly acidic pH, high electrical conductivity, and they are easily fermentable due to the presence of sugars and proteins. In the present invention, due to the presence of polyphenols, vegetation water is used to transfer these polyphenols into oily and/or lipid matrices to enrich them in polyphenol content.

The expression "enriched in polyphenols" means that the oily and/or lipid matrix has a higher polyphenol content than the non-enriched oily and/or lipid matrix, due to the transfer of polyphenols from the vegetation water.

The expression "oily and/or lipidic matrix" refers to a substance composed predominantly of lipids, which may be in liquid (oils) or solid (fats) form. These matrices are characterised by the presence of fatty acids and glycerides, and they can derive from both plant and animal sources. Examples of oil and/or fat matrices are olive oil, rice oil, palm oil, fish oil, omega-3 rich oils, sunflower oil, maize seed oil, soybean oil, rapeseed oil cottonseed oil, linseed oil, sesame seed oil, peanut oil, butter, margarine, lard, cocoa butter, lard, peanut butter, almond butter, coconut butter, cashew butter, hazelnut butter. The term "eutectic solvent" or "deep eutectic solvent" (DES) is understood, in the context of the present invention, to mean a solvent comprising two or more components, in particular at least one hydrogen bond acceptor (HBA) and one hydrogen bond donor (HBD), which interact with each other by self-associating and forming a eutectic mixture with a melting temperature much lower than that of its components. It is assumed that self-association occurs through hydrogen bonding interactions, although Van der Waals forces are also assumed to play a role.

The DES mentioned in this description and claims are also known in the industry as "low transition temperature mixtures" (LTTM).

Unlike conventional solvents, such as ethanol, methanol etc., deep eutectic solvents are non-volatile, which means they possess a very low vapour pressure and are therefore hardly flammable. The toxicity of eutectic solvents is very low, their biodegradability is high, and the precursors required for their production are generally inexpensive, readily and abundantly available and renewable.

The term "natural deep eutectic solvent", abbreviated NaDES, means, in the context of the invention, a eutectic solvent obtainable from precursors from natural sources, such as, for example, carbohydrates, organic acids, polyols, sugars or amino acids.

In the context of the invention, the expression "eutectic solvent extract" means an extract of polyphenols from or derived from olive oil obtained by employing a eutectic solvent according to any one of the embodiments described herein as an extraction solvent. According to a preferred aspect of the invention, the term "eutectic solvent extract" specifically refers to an extract of polyphenols of or derived from olive oil using a eutectic solvent as the extraction solvent by a process according to any one of embodiments as defined herein and in the claims.

At any point in the description, the term "comprising" may be replaced with the term "consisting of".

### DETAILED DESCRIPTION

The present invention relates to a method for preparing an oil and/or lipid matrix enriched in polyphenols, comprising the steps of:
(a) providing vegetation water,
(b) adding a salt to said vegetation water,
(c) mixing said vegetation water in step (b) with an oily and/or lipidic matrix, to obtain an oily and/or lipidic matrix enriched in polyphenols
(d) separating said oil and/or lipid matrix enriched in said vegetation water.

In a form of embodiment, the salt used in step b) is chosen from NaCl, KCI, MgCl₂, _{Na2}SO₄, (NH₄)₂SO₄.

In one embodiment, said salt added in said vegetation water in step b) is in a concentration of at least 1M, preferably at least 4M, even more preferably at least 6M. It has been shown that increasing the salt concentration increases the amount of polyphenols passing from the vegetation water to the oil and/or lipid matrix. Therefore, in a preferred embodiment the salt is added until saturation.

In a preferred embodiment, said oil and/or lipid matrix is selected from olive oil, rice oil, palm oil, fish oil, omega-3 rich oils, sunflower oil, maize seed oil, soybean oil, rapeseed oil cottonseed oil, linseed oil, sesame seed oil, peanut oil, butter, margarine, lard, cocoa butter, lard, peanut butter, almond butter, coconut butter, cashew butter, hazelnut butter. In an embodiment, in said step (c) said vegetation water and said oil and/or lipid matrix are in a ratio of 1.5:1 to 1:10 by weight vegetation water: oil and/or lipid matrix. In particular, the tested ratios that showed a surprising transfer of polyphenols from the vegetation water to the oil and/or lipid matrix are the vegetation water: oil and/or lipid matrix weight ratios 1:10, 2:10, 4:10, 8:10 and 1.5:1.

In a preferred embodiment, the present polyphenols transferred from the vegetation water to the oil and/or lipid matrix by the method according to the invention comprise one or more compounds selected from simple phenols (tyrosol, hydroxytyrosol), secoiridoids (oleocanthal, oleacein) and respective glycosides (ligstroside, oleuropein), flavonoids and lignans (apigenin, luteolin and pinoresinol), or mixtures thereof. In a preferred embodiment, the polyphenols present include oleocanthal and/or oleacein. Oleocanthal is a natural compound found in virgin olive oils. It is part of the polyphenol family. The importance and peculiarity of oleocanthal lies in its antioxidant and anti-inflammatory properties. Its anti-inflammatory action on the body is very similar to ibuprofen, one of the most widely taken non-steroidal anti-inflammatory agents. In addition, its activity as an antiplatelet agent has been noted.

Oleacein, another polyphenol in olive oil, has shown properties very similar to those of oleocanthal and, in particular, it possesses excellent antioxidant and antiproliferative activity.

The evaluation of the polyphenol content in the oil and/or lipid matrix can be carried out either by a colorimetric method (e.g. Folin Ciocalteau) or by chromatographic analysis (e.g. reversed-phase UHPLC with spectrophotometric and mass spectrometric detector). In an embodiment, the polyphenols are transferred from said vegetation water to said oil and/or lipid matrix in a concentration of at least 800 mg/Kg of oil and/or lipid matrix, preferably at least 1400 mg/kg of oil and/or lipid matrix.

A further object of the present invention is an oil and/or lipid matrix enriched in polyphenols obtainable by the method according to any one of the embodiments described herein. In a preferred embodiment, the polyphenol-enriched oil and/or lipid matrix has a polyphenol concentration of at least 800 mg/Kg of oil and/or lipid matrix, preferably at least 1400 mg/kg of oil and/or lipid matrix.

Advantageously, the oil and/or lipid matrix enriched in polyphenols has a high nutraceutical value due to the presence of the polyphenols.

Therefore, a further object of the present invention is a nutraceutical, food supplement or functional food comprising an oil and/or lipid matrix enriched in polyphenols obtained according to the method of the present invention.

The method of the present invention also allows to obtain oily and/or lipid matrices enriched in polyphenols, which can be advantageously used for the purpose of producing extracts in eutectic solvents, preferably extracts in natural deep eutectic solvents (NaDES) enriched in polyphenols in an even more economical manner than the present technique makes possible, starting no longer from extra-virgin olive oil, as described in Italian patent application no. 102022000009722 incorporated herein by reference, but from a waste product thereof and always using the same oil and/or lipid matrix, loading/unloading it in a cyclic manner.

Thus, another object of the present invention is a process for producing a polyphenol extract in eutectic solvent comprising the following steps:
(i) providing an oily and/or lipid matrix obtained by the method according to any of the embodiments described herein, enriched in said polyphenols;
(ii) bringing said oily and/or lipidic matrix into contact with said at least one eutectic solvent for a sufficient time to allow extraction of said polyphenols in said at least one eutectic solvent;
(iii) separating the polyphenol extract in eutectic solvent obtained in step (ii) from the oily and/or lipid matrix.

In a preferred embodiment of the process, the eutectic solvent employed is a NaDES comprising or consisting of either propylene glycol and betaine, or propylene glycol and choline, or propylene glycol and proline. Alternatively, said eutectic solvent is a NaDES comprising or consisting of glycerol and betaine, or glycerol and choline, or glycerol and proline.

The use of eutectic solvents, particularly NaDES, results in a stable polyphenolic extract. In other words, the shelf-life of the polyphenolic extract is guaranteed by the stabilising effect of the eutectic solvent, which prevents oxidation and degradation of the polyphenols. Indeed, the eutectic solvent allows polyphenolic compounds to be trapped in a cage of hydrogen bonds, hindering the onset of degradation processes caused by moisture, heat or oxidative processes and reaction with other molecules, thereby enhancing their pharmacological efficacy. This is particularly useful in order to preserve the stability of the most important of the polyphenols in the extracts, oleocanthal and oleacein, which, being two dialdehydes, are subject to rapid degradation and fast reactivity in the presence of amine substances with the formation of a stable Shiff base.

### EXAMPLES

### Example 1

A salt (NaCl, KCI, MgCl₂, Na₂SO₄, (NH₄)₂SO₄) is added at a high concentration (i.e. at the saturation point for each type of salt) to the vegetation waters obtained during pressing for the production of extra virgin olive oil. The addition of salt to the vegetation waters takes place after the oil has been obtained and does not come into contact with the product at any stage, so as not to impair the qualities and characteristics of the oil. Subsequently, the vegetation waters thus treated are mixed with various ratios of oil and/or lipid matrices. These matrices may be other olive oils, seed oils, solid matrices such as butter, and so on. During mixing, there is a net transfer of polyphenols, contained within the vegetation waters, to the oil and/or lipid matrix. The total quantity of polyphenols transferred is a function of the vegetation water: oil and/or lipid matrix ratios used, while the polyphenol profile, i.e. the quality of the polyphenols transferred, is a function of the vegetation water profile itself.

In particular, the more hydrophilic polyphenols such as hydroxytyrosol and tyrosol, for example, tend to be transferred with more difficulty in the oil and/or lipid matrix, whereas the more hydrophobic polyphenols such as oleacein, oleocanthal, oleuropein aglycone or ligstroside aglycone, tend to be transferred more easily and thus to be found at a higher concentration in the final product.

Experimental data demonstrate the technique's ability to transfer polyphenols, contained within vegetation waters obtained from the extra virgin olive oil production process, to seed oil, which is naturally devoid of these bioactive molecules.

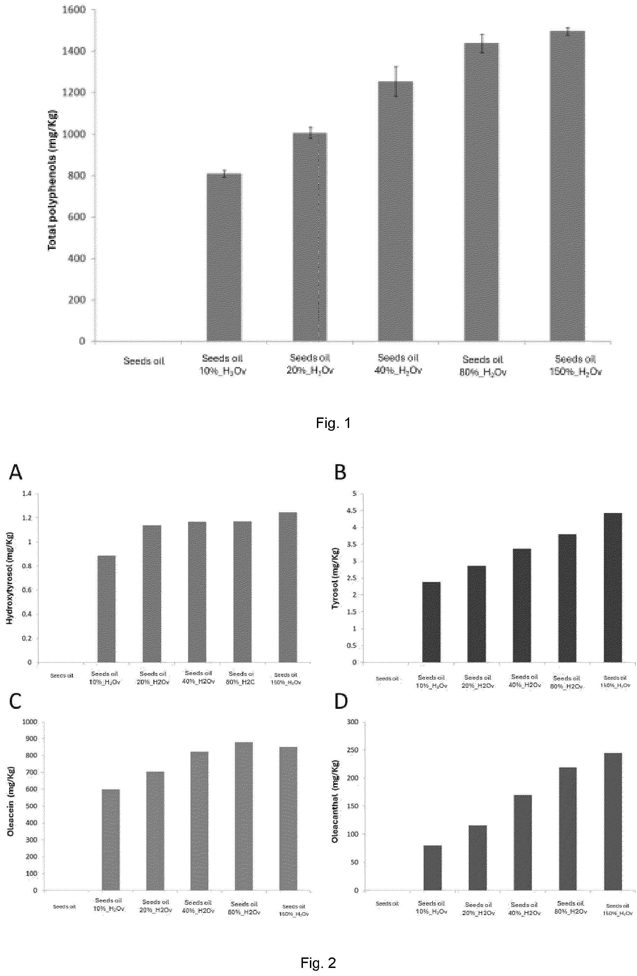

Specifically, the mixing of vegetation water, saturated with a 6M NaCl concentration, in various ratios with seed oil (1:10, 2:10, 4:10, 8:10 and 1.5:1 vegetation water: seed oil), allows the transfer of total polyphenols in a ratio-dependent manner. As can be seen from figure 1, the presence of polyphenols in the untreated seed oil is not detected as expected. On the contrary, treatment of the seed oil with 10% NaCl-saturated vegetation water is able to transfer the polyphenols contained in the vegetation water to the seed oil, reaching a concentration of 809.69 ± 17.95 mg/Kg of oil. As the vegetation water: seed oil ratios increase, the amount of polyphenols transferred increases, tending to stabilise around 1495.37 ± 17.96 mg/Kg with a vegetation water: seed oil ratio of 1.5:1 (Figure 1).

The analysis carried out by high-performance chromatography coupled with spectrophotometric and mass analysis (UPLC-DAD-MS) highlights how the more hydrophilic polyphenols such as hydroxytyrosol and tyrosol have a tendency to be transferred with more difficulty into the oil and/or lipid matrix, whereas the more hydrophobic polyphenols such as oleacein, oleocanthal, oleuropein aglycone or ligstroside aglycone, tend to be transferred more easily and thus to be found at a higher concentration in the final product. In particular, while hydroxytyrosol and tyrosol accumulate in the seed oil in a range of 0.88 to 1.24 mg/Kg for the former and 2.39 to 4.43 mg/Kg for the latter, the amounts of oleacein and oleocanthal transferred are much higher (598.02-850.61 and 79.78-244.93 respectively) (Figure 2).

The amount of total polyphenols, transferred from the vegetation water to the seed oil, increases as the concentration of NaCl used increases, approaching the saturation point (Figure 3).

The addition of NaCl to the vegetation water, produced during the process of washing, milling/crushing, pressing of the olives and production of the oil, yields another surprising and unexpected result. The vegetation water obtained from the oil production process tends to ferment and degrade its contents very rapidly within a few hours. As can be seen from Figure 4, the analysis carried out by high-performance chromatography coupled with spectrophotometric and mass analysis (UPLC-DAD-MS) shows that the polyphenols contained in the vegetation waters and transferred to the oil matrix tend to decrease as early as 48 hours and disappear completely at 110 and 158 hours. The addition of NaCl to the vegetation waters immediately after their production, on the contrary, keeps the amount of polyphenols stable over time.

## Claims

1. Method for the preparation of an oil and/or lipid matrix enriched in polyphenols, comprising the steps of:
(a) providing vegetation water,
(b) adding a salt to said vegetation water,
(c) mixing said vegetation water in step (b) with an oily and/or lipidic matrix, to obtain an oily and/or lipidic matrix enriched in polyphenols
(d) separating said oily and/or lipidic matrix enriched in said vegetation water.

2. The method according to claim 1, wherein said salt is NaCl, KCl, MgCl₂, Na₂SO₄, (NH₄) ₂SO₄.

3. The method according to any one of claims 1 or 2, wherein said salt added to said vegetation water in step b) is in a concentration of at least 1M, preferably at least 4M, even more preferably at least 6M.

4. The method according to any one of claims 1 to 3, wherein said oil and/or lipid matrix is selected from olive oil, rice oil, palm oil, fish oil, omega-3 rich oils, sunflower seed oil, corn seed oil, soybean oil rapeseed oil, cottonseed oil, linseed oil, sesame seed oil, peanut oil, butter, margarine, lard, cocoa butter, lard, peanut butter, almond butter, coconut butter, cashew butter, hazelnut butter.

5. The method according to any one of claims 1 to 4, wherein in said step c) said vegetation water and said oily and/or lipid matrix are in a vegetation water/oily and/or lipid matrix weight ratio of from 1.5:1 to 1:10.

6. The method according to any one of claims 1 to 5, wherein said polyphenols comprise one or more of tyrosol, hydroxytyrosol, oleocanthal, oleacein, ligstroside, oleuropein, apigenin, luteolin and pinoresinol or mixtures thereof.

7. The method according to any one of claims 1 to 6, wherein said polyphenols are transferred from said vegetation water to said oil and/or lipid matrix in a concentration of at least 800 mg/Kg of oil and/or lipid matrix, preferably at least 1400 mg/kg of oil and/or lipid matrix.

8. Oily and/or lipid matrix enriched in polyphenols obtainable by the method according to any one of claims 1 to 7

9. Nutraceutical product, food supplement or functional food comprising an oil and/or lipid matrix enriched in polyphenols according to claim 8.

10. A method for producing a polyphenol extract comprising the following steps:
(i) providing an oily and/or lipid matrix comprising said polyphenols obtained by the method according to any one of claims 1 to 8;
(ii) bringing said oily and/or lipid matrix into contact with said at least one eutectic solvent for a sufficient time to allow extraction of said polyphenols in said at least one eutectic solvent, preferably wherein said eutectic solvent is a NaDES comprising or consisting of propylene glycol and betaine, propylene glycol and choline, propylene glycol and proline, glycerol and betaine, glycerol and choline or glycerol and proline;
(iii) separating the polyphenol extract in eutectic solvent obtained in step (ii) from the oily and/or lipid matrix.
